Europäisches Patentamt

European Patent Office

Office européen des brevets

(19)

(11) Veröffentlichungsnummer: **0 235 512 B1**

(12) **EUROPÄISCHE PATENTSCHRIFT**

(45) Veröffentlichungstag der Patentschrift: **10.07.91**

(51) Int. Cl.⁵: **B29C  67/14**

(21) Anmeldenummer: **87100487.5**

(22) Anmeldetag: **16.01.87**

(54) Verfahren zur Herstellung von ebenen und schalenförmig gekrümmten Bauteilen.

(30) Priorität: **19.02.86 DE 3605256**

(43) Veröffentlichungstag der Anmeldung:
**09.09.87 Patentblatt  87/37**

(45) Bekanntmachung des Hinweises auf die
Patenterteilung:
**10.07.91 Patentblatt  91/28**

(84) Benannte Vertragsstaaten:
**DE ES FR GB IT**

(56) Entgegenhaltungen:
**DE-A- 1 504 759**
**DE-A- 1 704 670**
**US-A- 4 267 147**

(73) Patentinhaber: **DORNIER GMBH**
**Postfach 1420**
**W-7990 Friedrichshafen 1(DE)**

(72) Erfinder: **Roth, Siegfried, Dipl.-Ing.**
**Tobelstrasse 17**
**W-7777 Salem(DE)**
Erfinder: **Pönitzsch, Werner, Dr.-Ing.**
**Diamantstrasse 13**
**W-7990 Friedrichshafen(DE)**
Erfinder: **Benz, Detlef, Dipl.-Ing.**
**Auf dem Ruhbühl 103**
**W-7997 Immenstaad(DE)**
Erfinder: **Reichle, Anton**
**Burgunderstrasse 7**
**W-7758 Stetten(DE)**
Erfinder: **Reischmann, Alois**
**Henri-Dunant-Strasse 14**
**W-7990 Friedrichshafen(DE)**
Erfinder: **Kloiber, Alfred**
**Reuthenenweg 4**
**W-7997 Immenstaad(DE)**

(74) Vertreter: **Landsmann, Ralf, Dipl.-Ing.**
**Kleeweg 3**
**W-7990 Friedrichshafen 1(DE)**

**Beschreibung**

Die Erfindung betrifft ein Verfahren zur Herstellung von ebenen oder schalenförmig gekrümmten und mit Stringern, Rippen oder Spanten als Verstärkungsprofile versehene Bauteile verschiedener Abmessungen aus faserverstärkten Kunststoffen.

Derartige Bauteile ersetzen gleichwertige Konstruktionen aus verschiedenen Blechen. Damit wird eine erhebliche Verringerung des Gewichtes der Bauteile erzielt.

Aus der Praxis sind derartige Verfahren bekannt, bei welchen z.B. mittels der Kassettentechnik ein stringerversteiftes Hautfeld durch Innendruckkassetten geformt und gehärtet wird.

Hierbei dienen die zu mehreren aneinander gereihten Kassetten als formgebende Mittel, wobei ihnen über jeweils angeordnete Ventile ein Autoklavendruck zugeführt und auf die über dem Hautfeld angeordneten Kassetten eine Vakuumfolie gelegt wird. Bei einem nach dem Thermoexpansiv-System arbeitenden Verfahren werden auf eine vorgefertigte mit Stringern versehenen Werkstück Distanzleisten aus Aluminium auf die Enden der Stringern gelegt und ihre Seiten mit Formteilen aus Formgummi ausgelegt. Als Füllung zwischen den Stringern werden Füllstücke aus Silikongummi eingebracht und über der gesamten Anordnung eine Vakuumfolie gelegt. Das Werkstück wird dann, ähnlich einem Backprozeß, unter dem Wärmeeinfluß geformt und ausgehärtet. Nachteilig ist bei diesen Verfahren der große Fertigungsaufwand bezüglich der Fertigungsmittel, Verwendung einer Vakuumfolie und damit verbundene Dichtprobleme, Toleranz- und Lunkerprobleme, sowie der damit verbundene hohe Kostenaufwand.

Ferner ist aus der EP-A-O 142 697 ein gekrümmtes Flächenbauteil, insbesondere für Rümpfe von Luftfahrzeugen, mit aus faserverstärktem Kunststoff bestehenden längs verlaufenden Stringern und quer verlaufenden Spanten, die ein Gitter bilden und mit mindestens einer aus faserverstärktem Kunststoff bestehenden Beplankung versehen sind, wobei das Gitter aus Kastenrahmen gebildet ist, die im Bandagierverfahren hergestellt sind und deren Seitenteile zum Aufbau der Stringer und Spante dienen. Hierbei sind die Spante zusätzlich durch eingurtige, aus faserverstärktem Kunststoff bestehende Spantsegmente gebildet, wobei deren Höhe ein Mehrfaches der Höhe der Stringer beträgt. Nachteilig ist auch hierbei der hohe fertigungstechnische Aufwand und die damit verursachten grossen Herstellungskosten.

Ausgehend von diesem bekannten Stand der Technik ist es Aufgabe der Erfindung, ein Verfahren anzugeben, mit welchem es möglich ist, ausgesteifte Schalen, Hautfelder und sonstige ebene und/oder gekrümmte Bauteile und Beplankungen mit kleinen und größeren Abmessungen aus faserverstärkten Werkstoffen herzustellen.

Erfindungsgemäß wird die gestellte Aufgabe durch die kennzeichnenden Merkmale des Anspruchs 1 gelöst. Vorteilhafte Weiterbildungen ergeben sich aus den Unteransprüchen.

Der Vorteil der Erfindung besteht darin, daß damit eine Reduzierung der Fertigungsmittel und -kosten, der Arbeitsvorgänge, der Ausschußminderung, der Herstellungs- und Prüfkosten sowie eine Verbesserung der Qualität und eine geringere Anforderungen an die Qualifikation des Personals verbunden ist. Das Verfahren und dessen Anwendung beschränkt sich nicht allein auf den Flugzeugbau; damit ist es auch möglich, Bauteile in verschiedenster Form z.B. im Kraftfahrzeugbau, Behälter- und Kabinenbau fertigungs- und kostengünstig herzustellen.

Nach Einbringen von vorgefertigten unausgehärteten Versteifungsprofilen, wie Stringer, Rippen oder Spanten in eine mit Aussparungen versehene und mit Fasern verstärkte elastische Kunststoffmatte, wird auf diese eine ebenfalls unausgehärtete Beplankung aufgelegt. Die Matte ersetzt gleichzeitig die zur Aushärtung notwendige Vakuumabdichtung und gewährleistet die einzuhaltenden Hautfeld- und Profildickentoleranzen, ebenso wie die notwendigen Richtungsverläufe der Versteifungen. Gleichzeitig wurde durch Versuche nachgewiesen, daß die Qualität der gefertigten Bauteile hinsichtlich Fehler wie Lunker oder Delamination, den Anforderungen gerecht wird. Die elastische Matte legt sich während der Aushärtung unter Wärme und Druck infolge ihrer geometrischen und versteifungsspezifischen Gestaltung so an die mit den Versteifungsprofilen ausgelegte Kontur an, daß sowohl die erforderliche Stützfunktion, als auch die notwendigen Anpreßkräfte über das Vakuum, eine optimale Qualität des fertigen Bauteils ergeben. Hiermit ist es möglich, voneinander unterschiedliche Versteifungsprofile herzustellen.

Ausführungsbeispiele sind folgend beschrieben und durch Skizzen erläutert.

Es zeigen:

Figur 1     eine Formmulde mit darin eingelegtem Ausgleichsblech und Simulate für Beplankung und Stringer,

Figur 2     oben, die Formmulde gemäß Figur 1 und eine auf die Simulate gelegte elastische Matte mit Vakuumfolie und Flieslage, sowie ein an deren Enden abschließendes Dichtband,

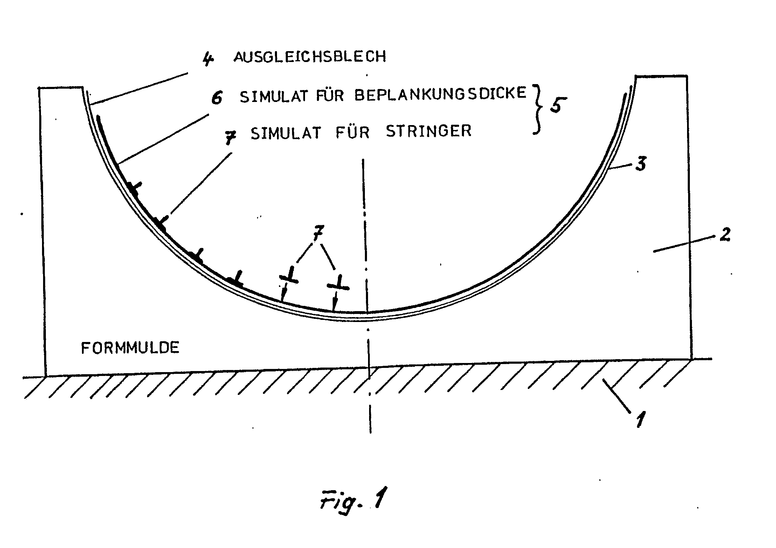

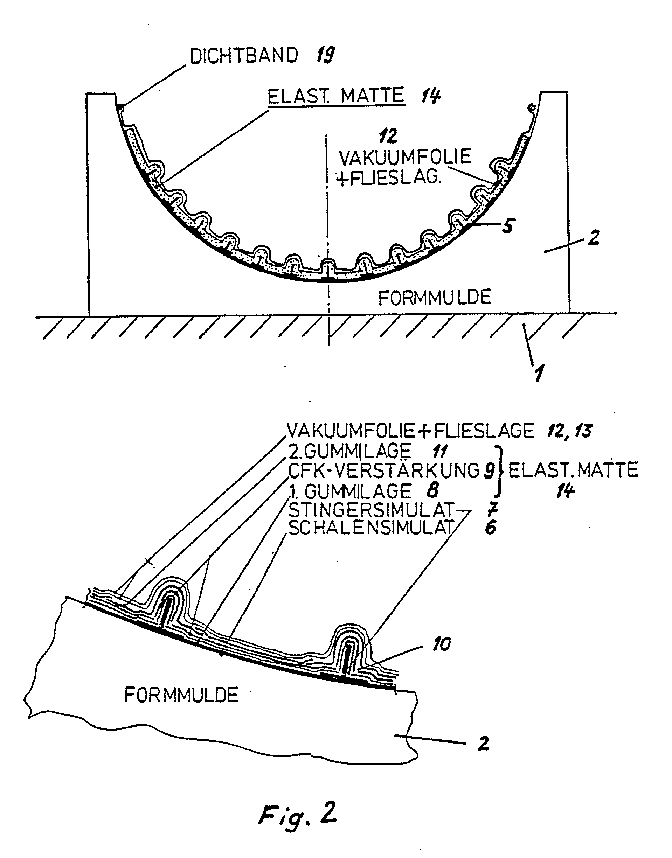

Figur 2     unten, ein Ausschnitt der Formmulde mit den darauf angeordneten einzelnen Lagen gemäß Figur 1 und 2 oben,

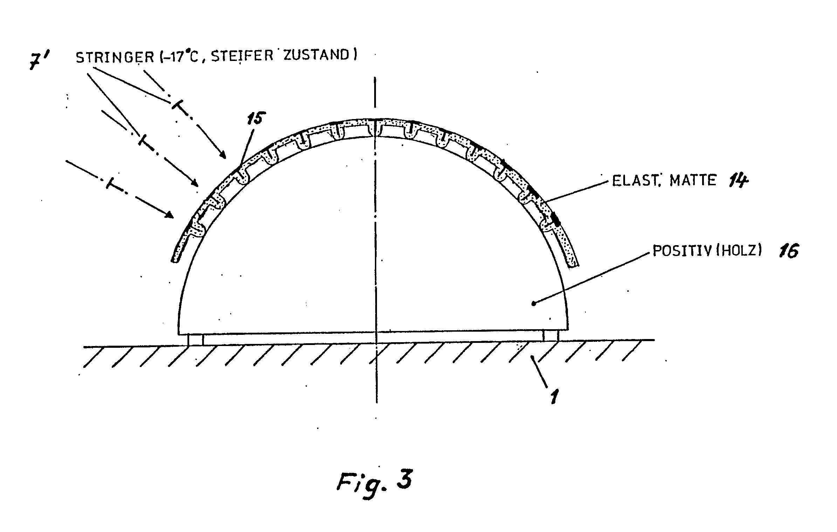

Figur 3     ein Formpositiv mit darauf angeordneter elastischer Matte und darin eingelegten Stringern,

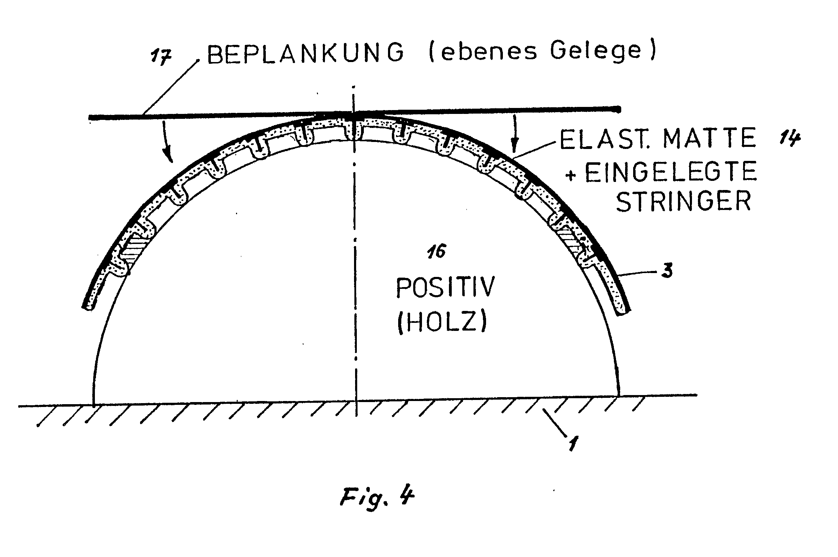

Figur 4    das Formpositiv mit elastischer Matte, Stringern gemäß Figur 3 und ein darüber liegendes und als Beplankung vorgesehenes ebenes Gelege,

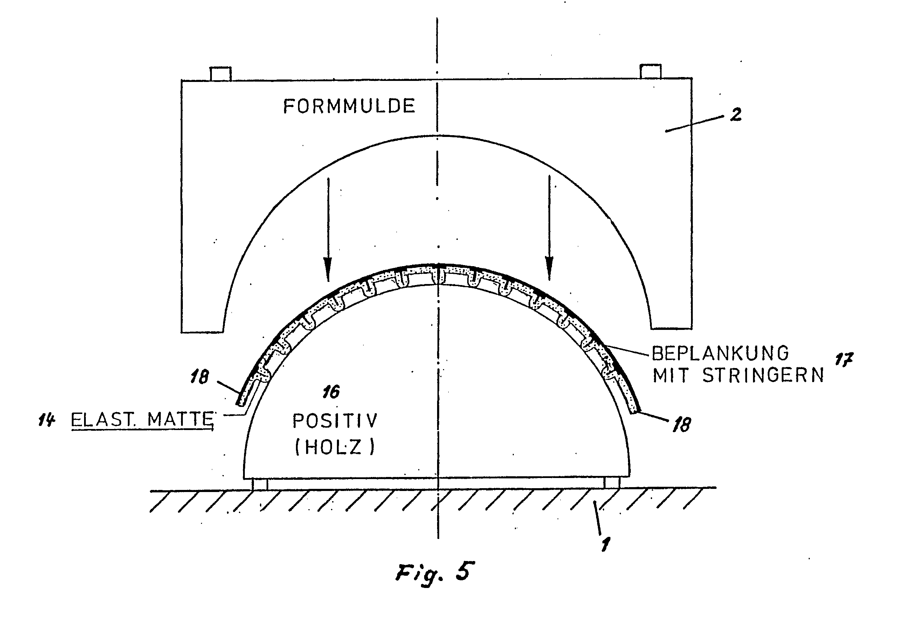

Figur 5    das Formpositiv mit Matte, Stringern und darauf verformten Gelege gemäß Figur 4 und der darüber angeordneten Formmulde,

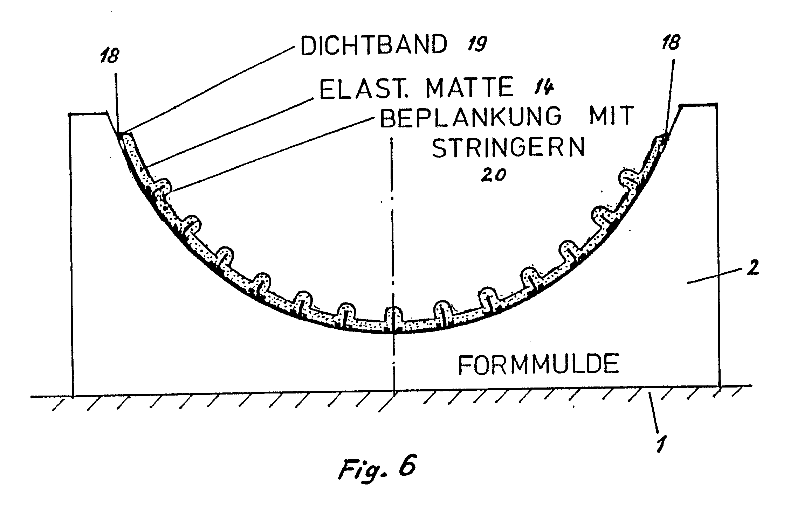

Figur 6    die Formmulde mit darin zur Fertigstellung vorbereiteter Matte, Beplankung mit Stringer und Dichtband.

Aus den Figuren 1 und 2 ist eine auf einer Unterlage 1 angeordnete Formmulde 2 ersichtlich, auf deren vorgegebene Kontur 3 zunächst ein Ausgleichsblech 4 (falls erforderlich) und darauf eine für die Dicke einer Beplankung vorgesehenes und mit Stringern bestücktes Simulat 5 gelegt wird. Das aus einer Grundfläche 6 und von darauf entsprechend den Erfordernissen verteilt angeordneten Profilteile, z.B. Stringern 7 vorbereitete Simulat 5 besteht aus einem Werkstoff, der den Vulkanisierbedingungen während des Härteprozesses stand hält (z.B. Bleche, Holz oder Kunststoff). Die Befestigung der Stringer 7 auf der Grundfläche 6 erfolgt entsprechend der vorgegebenen Kontur und den Positionen durch Kleben, Stecken, Schrauben oder Nieten (Figur 1).

Auf die Simulate 5 wird z.B. eine erste Gummischicht 8 und darauf eine faserverstärkte Kunststoffschicht 9, z.B. ein CFK-Prepreg gelegt, wobei diese an den als Dehnungszonen wirkenden Kanten 10 der Simulate 5 unterbrochen ist, um einen Dehnungsausgleich zu gewährleisten (Figur 2 unten). Auf die Kunststoffschicht 9 wird eine zweite durchgehende und nicht unterbrochene vakuumdichte Gummischicht 11 mit einer darüber liegenden vakuumführenden porösen Schicht 12, z.B. ein Kunstfaserflies, gelegt. Zur Abdichtung der vorbeschriebenen Schichten 8, 9, 11, 12 wird darüber eine Vakuumfolie 13 gelegt. Diese auf den Simulaten 5 angeordneten Schichten werden durch Einwirkung von Wärme und/oder Druck in einem an sich bekannten Ofen oder Autoklaven (in den Figuren nicht gezeigt) nach vorgegebenen Härtebedingungen der hierzu verwendeten Werkstoffe zu einer elastischen Matte 14 ausgehärtet. Nach erfolgter Aushärtung wird die elastische Matte 14 entformt, wobei die von den Simulaten 5 gebildeten Aussparungen 15 freigegeben werden (Figur 3). Die so fertigungsgerecht vorbereitete elastische Matte 14 wird umgekehrt auf eine auf der Unterlage 1 stehende Positivform 16 (z.B. Holz) gelegt. Dabei werden in die von den Simulaten 5 gebildeten Aussparungen 15 ungehärtete aus faserverstärktem Kunststoff bestehenden Profilteile 7' (z.B. Stringer, Rippen oder Spante) eingesetzt. Um eine ausreichende Steifigkeit der Profilteile 7' für das

Einsetzen zu gewährleisten, ist es erforderlich, daß ihre Temperatur auf ca. -17° C abgekühlt sein muß (Figur 3). Über die auf der Positivform 16 umgekehrt liegende elastische Matte 14 wird ein zunächst relativ ebenes faserverstärktes Beplankungsgelege 17 positioniert und anschließend entsprechend der Kontur 3 der Matte 14 umgeformt (Figur 4 und 5). Auf das so umgeformte Beplankungsgelege 17 wird die Formmulde 2 positioniert (Figur 5). Die Enden 18 der Matte 14 werden zur Formmulde 2 hin durch ein Dichtband 19 abgedichtet (Figur 6). Anschließend wird zwischen der Formmulde 2 und Matte 14 ein Vakuum angelegt. Anschließend wird die Formmulde 2 zusammen mit der Matte 14 und einem herzustellenden Bauteil (20) von der Postivform 16 abgehoben, gedreht und dem Härteprozeß in einem Ofen oder Autoklaven unterworfen. Nach erfolgter Aushärtung wird die Matte 14 vom Bauteil (20) entformt. Das fertige Bauteil (20) besitzt somit die geforderten genauen Fertigungsmaße und bedarf keinerlei Nachbearbeitung.

Das Verfahren ist ohne weiteres auch in der Wickelkerntechnik anwend- und einsetzbar.

**Ansprüche**

1.  Verfahren zur Herstellung von ebenen oder schalenförmig gekrümmten und mit Stringern, Rippen oder Spanten als Versteifungsprofile versehenen Bauteilen verschiedener Abmessungen aus faserverstärkten Kunststoffen, **gekennzeichnet** durch folgende Verfahrensschritte:

    a) Anordnung von Simulaten (7) für die Versteifungsprofile auf einem Simulat (6) für die Beplankung auf der Kontur (3) einer Formmulde (2) als formgebende Vorrichtung,

    b) Auftragen eines faserverstärkten Elastomers oder Kunststoffes auf das aus den Simulaten (6, 7) bestehende Simulat (5),

    c) Aushärten des Elastomers oder Kunststoffes zu einer Matte (14),

    d) nach Entformung der Matte (14) Entfernen des Simulats (5) aus der Formmulde (2),

    e) Einbringen von aus faserverstärkten Kunststoffen bestehenden vorgefertigten unausgehärteten Versteifungsprofilen (7') (Stringer, Rippen oder Spanten) in die mit Aussparungen (15) versehene Matte (14),

    f) Auflegen eines ebenen ungehärteten aus faserverstärkten Kunststoffen bestehenden Beplankungsgeleges (17) auf die mit den Versteifungsprofilen (7') versehene Matte (14),

    g) Umformen des Beplankungsgeleges (17) über der Matte (14) und Auflegen der Formmulde (2) auf das umgeformte Beplankungsgelege (17), wobei die Matte (14) gegenüber der Formmulde (2) an den Rändern (18) vakuumdicht abgedichtet wird (19) und anschließend in einem Ofen oder Autoklaven die Beplankung (17) und die Versteifungsprofile (7') bei einer Temperatur bis maximal 400 °C und unter einem Druck bis maximal 15 bar in einem Arbeitsgang durch Aushärten miteinander verbunden werden,

h) Entfernen der Matte (14) vom Bauteil (20).

2. Verfahren nach Anspruch 1, dadurch gekennzeichnet, daß die Ränder (18) der Matte (14) zur Formmulde (2) hin vakuumdicht abschließen.

3. Verfahren nach den Ansprüchen 1 und 2, dadurch gekennzeichnet, daß zur Herstellung der Matte (14) verschiedene faserverstärkte Elastomerwerkstoffe, z.B. Silikonkautschuke, Gummis verwendet werden.

4. Verfahren nach den Ansprüchen 1 bis 3, dadurch gekennzeichnet, daß Änderungen von Dicken, Stufungen und Konizitäten durch die Eigenelastizität der Matte (14) automatisch angeglichen werden.

5. Verfahren nach den Ansprüchen 1 bis 4, dadurch gekennzeichnet, daß die mit Aussparungen (15) versehene Matte (14) für die Wickelkerntechnik verwendet wird.

## Claims

1. Method of producing structural parts of different sizes of fibre-reinforced plastics which are flat or bent in the form of a shell and provided with stringers, ribs or frames as reinforcing profiles, characterised by the following method steps:

a) arranging simulates (7) for the reinforcing profiles on a simulate (6) for the covering on the outline (3) of a form mould (2) as a shape-giving device,

b) disposing a fibre-reinforced elastomer or synthetic material onto the simulate (5) comprising the simulates (6, 7),

c) hardening the elastomer or synthetic material to form a mat (14),

d) after removal of the mat (14) from the mould, removing the simulate (5) from the form mould (2),

e) inserting prefabricated, unhardened fibre-reinforced plastics reinforcing profiles (7') (stringers, ribs or frames) into the mat (14), which is provided with recesses (15),

f) disposing a flat unhardened fibre-reinforced plastics covering sheet (17) on the mat (14) which is provided with the reinforcing profiles (7'),

g) shaping the covering sheet (17) over the mat (14) and disposing the form mould (2) on the shaped covering sheet (17), whereby the mat (14) is sealed at the edges (18) with respect to the form mould (2) in an air-tight manner (19) and subsequently in a working stage the covering (17) and the reinforcing profiles (7') are connected to one another by hardening in an oven or autoclave at a temperature up to a maximum of 400 °C and under a pressure up to a maximum of 15 bar,

h) removing the mat (14) from the structural part (20).

2. Method according to claim 1, characterised in that the edges (18) of the mat (14) are blanked off towards the form mould (2) in an air-tight manner.

3. Method according to claims 1 and 2, characterised in that different fibre-reinforced elastomer materials, such as silicon caoutchouc, rubber, are used for the production of the mat (14).

4. Method according to claims 1 to 3, characterised in that changes in thickness, grading and taper are automatically adjusted owing to the elasticity of the mat (14).

5. Method according to claims 1 to 4, characterised in that the mat (14) which is provided with recesses (15) is used in the winding core technique.

## Revendications

1. Procédé pour la fabrication d'éléments de structure plats ou en forme de cuvette de différentes dimensions en matière plastique renforcée par des fibres, munis de raidisseurs, de nervures ou de couples servant de profils de renforcement, **caractérisé en ce** qu'il comprend les étapes suivantes :

a) Mise en place de simulats (7) pour les profils de raidissement sur un simulat (6) pour le bordage sur le contour (3) d'une cuvette de formage (2) comme dispositif de formage;

b) application d'un élastomère ou d'une matière plastique renforcé par des fibres sur le simulat (5) composé des simulats (6, 7);

c) durcissement de l'élastomère ou de la matière plastique en un mat(14);

d) après le démoulage du mat (14), enlèvement du simulat (5) de la cuvette de formage (2);

e) mise en place de profils de raidissement (7') (raidisseurs, nervures ou couples) non durcis préfabriqués en matières plastiques renforcées par des fibres dans le mat (14) muni d'évidements (15);

f) pose d'une couche de bordage (17) plate non durcie en matières plastiques renforcées par des fibres, sur le mat (14) muni des profils de raidissement (7');

g) déformation de la couche de bordage (17) sur le mat (14) et pose de la cuvette de formage (2) sur la couche de bordage (17) déformée, les bords (18) du mat (14) étant rendus étanches au vide (19) par rapport à la cuvette de formage (2), puis le bordage (17) et les profils de raidissement (7') sont réunis en une seule opération, par durcissement, dans un four ou un autoclave à une température maximale de 400°C et sous une pression maximale de 15 bars;

h) enlèvement du mat (14) de l'élément de structure (20).

2. Procédé selon la revendication 1, caractérisé en ce que les bords (18) du mat (14) assurent une étanchéité au vide en direction de la cuvette de formage (2).

3. Procédé selon l'une des revendications 1 et 2, caractérisé en ce que différents élastomères renforcés par des fibres, par exemple des caoutchoucs silicones, des caoutchoucs, sont utilisés pour la fabrication du mat (14).

4. Procédé selon l'une des revendications 1 à 3, caractérisé en ce que des variations d'épaisseurs, des échelonnements et des conicités sont compensés automatiquement par l'élasticité propre du mat (14).

5. Procédé selon l'une des revendications 1 à 4, caractérisé en ce que le mat (14) muni d'évidements (15) est utilisé pour la technique des tores enroulés.

4  AUSGLEICHSBLECH

6  SIMULAT FÜR BEPLANKUNGSDICKE $\Big\}$ 5

7  SIMULAT FÜR STRINGER

3

2

7

FORMMULDE

1

*Fig. 1*

EP 0 235 512 B1

DICHTBAND *19*

ELAST. MATTE *14*

*12*
VAKUUMFOLIE
+FLIESLAG.

*5*

*2*

FORMMULDE

*1*

VAKUUMFOLIE+FLIESLAGE *12,13*
2.GUMMILAGE *11*
CFK-VERSTÄRKUNG *9* } ELAST.MATTE
1.GUMMILAGE *8* *14*
STINGERSIMULAT *7*
SCHALENSIMULAT *6*

*10*

FORMMULDE

*2*

*Fig. 2*

7'  STRINGER (−17°C, STEIFER ZUSTAND)

15

ELAST. MATTE **14**

POSITIV (HOLZ) **16**

1

*Fig. 3*

EP 0 235 512 B1

17 BEPLANKUNG (ebenes Gelege)

ELAST. MATTE 14
+ EINGELEGTE
STRINGER

16
POSITIV
(HOLZ)

3

1

Fig. 4

FORMMULDE

2

BEPLANKUNG
MIT STRINGERN 17

18

16
POSITIV
(HOLZ)

14 ELAST. MATTE

18

1

*Fig. 5*

EP 0 235 512 B1

DICHTBAND *19*

ELAST. MATTE *14*

BEPLANKUNG MIT STRINGERN *20*

18

18

2

FORMMULDE

1

*Fig. 6*

EP 0 235 512 B1